# EUROPEAN PATENT SPECIFICATION

(11) **EP 1 370 441 B1**
(45) Date of publication and mention of the grant of the patent: **11.06.2008**
(21) Application number: 02703521.1
(22) Date of filing: 08.03.2002
(51) Int. Cl.: B60P 1/44

(54) **LIFT DEVICE FOR VEHICLES**
HUBVORRICHTUNG FÜR FAHRZEUGE
DISPOSITIF DE LEVAGE DESTINE A DES VEHICULES

(30) Priority: 09.03.2001 DK 200100398
(43) Date of publication of application: 17.12.2003
(73) Proprietor: Pendelmatic International APS, 2670 Greve (DK)
(72) Inventor: MOLLER, Jan, DK-2670 Greve (DK)
(74) Representative: Roerboel, Leif
(86) International application number: PCT/DK2002/000152
(87) International publication number: WO 2002/072385

(56) References cited:
- EP-A2- 1 157 885
- DE-A1- 19 743 503
- US-A- 2 418 494
- US-A- 4 138 023
- US-A- 5 065 844
- US-A- 5 791 860

## Description

### TECHNICAL FIELD

The present invention relates to a lift device for vehicles and more particularly to lift devices for loading and unloading cargo through a doorway either located in the rear end or at the side of a van or other suitable vehicle, as set forth in the preamble of claim 1.

### DESCRIPTION OF PRIOR ART

A large number of lift devices are described in the literature. Some of these can be attached to the bottom of the vehicle, and the platform for loading the cargo is connected to the bottom attachment by means of a mechanism comprising two parts provided with parallel arms, this attachment during use of the lift resulting in a large torque being exerted on the bottom of the vehicle, as a consequence of which the bottom part of the vehicle needs to be reinforced, so that lift devices of this kind can not be installed in any van or the like comprising an integral body-frame. The mounting of the lift device on the bottom of the vehicle furthermore restricts the maximum lateral dimension of the lift, which can also be a disadvantage.

Other lift devices require a special construction of for instance the rear part of the vehicle. An example of the latter kind of lift devise is described in DE 197 43 503, where the platform of the lift is vertically displaceable along guide means attached to the rear part of the side walls of the vehicle. The platform according to DE 197 43 503 furthermore constitutes a part of the rear door of the vehicle, as it is swung into its vertical position.

US 2 418 494 discloses a lift device for instance for use in a vehicle, which lift device is of the same basic structure as the lift device according to the present invention. The lift device according to US 2 418 494 thus comprises a rigid framework attached for instance to the inner wall portion surrounding a back door of a van or truck. Vertical side portions of this framework are shaped to accommodate hydraulic cylinders pivotally attached at the upper end of said framework and which during use can be swung outwardly into a position, where they clear the floor of the vehicle. Said cylinders are used for lowering and raising a platform, which during use can be swung from a vertical position to a substantially horizontal position. The platform is moved in the vertical direction by means of the two hydraulic cylinders. No means for synchronising this movement are disclosed, although it is mentioned that such means may be incorporated if necessary for maintaining the surface of the platform in a substantially horizontal position.

US 4 056 203 discloses a lift device primarily lowering a wheelchair from a vehicle to the ground and vice versa. This lift device is defined by a platform, which can be swung from a substantially vertical storage position to a substantially horizontal operative position. The lowering and raising of this platform is accomplished by means of telescopic sliding mechanism placed at either side of the platform, in which an inner member can undergo a sliding displacement within an outer member driven by a chain coupled to a chain wheel located at the upper ends of the sliding mechanism. The two chain wheels are connected to each other via a shaft and thus moves in synchronism driven by a double-acting hydraulic cylinder. No means are thus provided for individual movement of the two sliding mechanisms.

US 4 121 695 discloses another lift device for wheelchair applications, in which a main object is to provide a lift device, which is capable of safely lowering an occupied wheelchair from a vehicle floor level to the ground, even in case of a power or hydraulic failure. The basic structure of this device is the same as in the two preceding documents, but the lowering and raising of the platform carrying the wheelchair is accomplished by means of cables attached to inner sliding means for vertical movement of the platform, which cables via pulleys are driven by a single hydraulic cylinder. The upward movement of the platform is terminated by engagement of a stop member at either lateral side of the platform with a corresponding member on the frame structure of the device.

US 4 138 023 discloses another example of a lift device of the above basic configuration, where the vertical movement of the platform is effected by means of separate hydraulic cylinders disposed within telescopic sliding mechanisms on either side of the platform. As the lift device is rotated from its vertical position about a pivot at its top, a hinged bridge plate is lowered to cover the gap created between the rear of the vehicle and the edge of the platform. The platform is rotated between vertical and horizontal positions by means of a pair of pivoting cams, which are engaged with a pair of pins and are raised and lowered, i.e. rotated, by means of an electric screw. Thus, the platform can be rotated but this process requires both a set of hydraulic cylinders and an electric screw.

Finally, DE 197 43 503 A1 discloses a vehicle mounted lift device, where a platform can be raised and lowered by a pair of hydraulic cylinders. The platform here may also be rotated about a point by means of a piston of some kind. If the platform is in its lowered position and is raised by the piston, a cut-out having a concave curved portion comes into contact with a roller which is attached to the main lift frame. As the platform continues to rise, the roller engages with the cut-out and due to gravity acting on the substantially horizontal platform exerts a force upon the platform to rotate resulting in the platform tending increasingly towards the vertical. On rotating the platform from a vertical position to a horizontal one, the reverse applies but this assumes that the vehicle is in a horizontal position so that gravity can initiate the downwards rotation.

### DISCLOSURE OF THE INVENTION

The invention relates to a cargo lift device of the kind generally disclosed in the above four patent specifications that can be installed in any vehicle suitable for such lifts, such as various forms of vans. The lift device according to the present invention can be installed in the vehicle without major modifications of the vehicle apart from the provision of suitable attachments, and can also be installed in vehicles of light construction, i.e. without any special reinforcement of the vehicle, i.e. in vehicles with an integral body-frame.

It is the object of the present invention to provide a lift device according to the preamble of claim 1 which can be mounted in any vehicle suitable for such devices without major modifications of the vehicle apart from the provision of suitable attachment means at the appropriate locations of the side walls of the vehicle and possibly also on the bottom of the vehicle. Furthermore, the vehicle may be provided with suitable support legs on the bottom of the vehicle in order to support the weight of the cargo to be lifted with the lift device, if this is considered necessary in specific cases. According to the invention, said attachment means can be made comparatively light and of restricted spatial extent making it possible to hide them completely behind the often curved side of the rear opening. Thus, the largest possible lateral dimensions of the lift device, and hence the platform, can be attained.

It is a further object of the present invention to provide a lift device that during transport can be housed completely within the vehicle, with the back or side door(s) of the vehicle closed.

It is a further object of the present invention to provide a lift device which minimises the torque exerted on the vehicle during operation of the lift device, so that even vehicles of very light construction, i.e. without any reinforcement of the sides and/or bottom of the vehicle, can be equipped with the lift device according to the invention.

It is a further object of the invention to provide a lift device which automatically compensates for a possible horizontal misalignment of the platform relative to the floor of the vehicle when the platform is raised to the floor level of the vehicle, said horizontal misalignment being for instance caused by irregularities of the ground beneath the backportion of the vehicle.

It is a further object of the invention to provide a lift device in which the plane of the platform may not be parallel to the floor of the vehicle when the platform is in its lowered position. Hence the lift device according to the invention may be applied in situations where the ground, against which the platform in its lowered position is resting, is sloping relative to the ground upon which the vehicle is resting.

It- is a further object of the invention to provide a lift device in which the platform may be stopped at arbitrary levels above the ground, i.e. not only at ground level and at the level of the floor of the vehicle, but also at other vertical levels, both between the ground level and the floor level and above the floor level.

The lift device according to the invention is thus a very versatile device, which may be adapted to a number of applications and operating conditions.

These and other objects are attained with a lift device according to the present invention, where the device essentially comprises three components: a pair of support means to be attached to the inner surface of the vehicle on either side of the corresponding doorway in a substantially vertical position; a corresponding pair of guide means pivotally connected to each of said support means in the vicinity of the uppermost longitudinal end hereof in such a manner that said guide means can be swung out of the doorway of the vehicle to a position, where they just clear the bottom of the vehicle, where each of said guide means are furthermore provided with separate drive means, which can be driven independently of each other, for moving a platform in the longitudinal direction of said guide means; and platform support means provided with a platform, displaceably mounted on said guide means for raising or lowering a cargo to be inserted into/removed from said vehicle, where said guide means and said platform support means/platform in an initial state are substantially aligned with said support means in a substantially vertical position completely housed within the vehicle, and where during a next operational stage the guide means are swung out as described above, with the platform/platform support means still located in substantial alignment with the guide means, whereupon the platform/platform support means is lowered along the guide means until a longitudinal position on the guide means is reached, where the platform support means is brought into contact with suitable pivot means, whereby a further lowering of the platform support means will make this rotate about the pivot means and thereby gradually reach a substantially horizontal position, in which position it can be maintained for instance by means of a chain or wire between the platform support means and the guide means.

After loading the cargo onto the platform on the platform support means, the platform and platform support means are again raised, until a level where insertion of the cargo into the vehicle becomes possible.

When inserting the cargo into the vehicle, it is important that the platform is properly aligned with the floor of the vehicle. In practical use of the lift device according to the invention, it may happen that due to for instance ground irregularities, the platform is raised in a state where the plane of the platform is not parallel with the plane of the floor of the vehicle. This lack of alignment between the platform and the floor of the vehicle may make insertion of the cargo into the vehicle difficult or even impossible, and hence the presence of separate drive means for the platform in each of said guide means is utilised to compensate for such horizontal misalignment of the platform relative to the floor of the vehicle. Thus, the lift device according to the invention is provided with a platform alignment system being able to sense whether the plane of the platform is parallel with the plane of the floor of the vehicle and to correct possible misalignments. This system comprises means for independently driving each of said guide means carrying the platform in the longitudinal direction of the guide means, so that opposite transversal sides of the platform are brought to assume substantially the same vertical level relative to the bottom of the vehicle. One embodiment of this alignment system will be described in the detailed description of the invention.

After use of the lift device, the reverse series of steps as described above are repeated, resulting in the platform support means being rotated back to its initial position in alignment with the guide means, whereupon the guide means are finally brought into substantial alignment with the support means. It is now possible, if desired, to close the door of the vehicle.

The above described rotation of the guide means relative to the support means and the longitudinal displacement of the platform support means can be effected by means of suitable actuators which can for instance be hydraulic, or alternatively oil motors provided with a spindle mechanism. It would in principle of course also be possible to perform these operations manually.

According to an embodiment of the lift device according to the invention, the guide means is made as a telescopic construction, with an outer tube (which needs not necessarily be of circular cross section) pivotally attached at its upper end to the support means, and with an inner tube, slidably displaceable within the outer tube. This embodiment will be described in detail at the end of the present description, but it is understood that other arrangements could in principle also be used, without deviation from the scope of the invention, as defined by the accompanying claims.

### BRIEF DESCRIPTION OF THE DRAWINGS

The invention will now be described in more detail with reference to the accompanying drawings, in which
Figure 1 is a perspective view of the lift device according to the invention shown in the transport state but prior to the closing of the rear doors, where it is completely housed within the vehicle;
Figure 2 is a perspective view of the lift device according to the invention shown in a state where the guide means has been swung out of the rear end of the vehicle, but with the platform and platform support means still in a position, where they are aligned with the guide means;
Figure 3 is a perspective view of the lift device according to the invention shown in a state where it is ready for receiving for instance a pallet to be raised to the level of the floor of the vehicle;
Figure 4a is a schematic side elevational view of various stages of the lowering or raising of the platform along the guide means also depicting the optional support leg positioned under the rear end of the vehicle;
Figure 4b is a schematic side elevational view corresponding to Figure 4a but with the inclination of the platform adapted to that of a downwardly sloping ground;
Figure 4c is a schematic side elevational view of the lift device shown with the platform/platform support means, guide means and support leg in the transport state, where the back doors of the vehicle can be closed;
Figure 5 is a detailed view of the pivot mechanism of the platform;
Figure 5a is a detailed view of an alternative pivot mechanism of the platform shown in one state hereof;
Figure 5b is the alternative pivot mechanism according to Figure 5a shown in another state hereof; and
Figure 6 is a schematic representation of a platform alignment system.

### DETAILED DESCRIPTION OF THE INVENTION

In the following, a detailed description of one embodiment of the lift device according to the invention is given. In this embodiment, the lift device is mounted at the rear doorway of the vehicle.

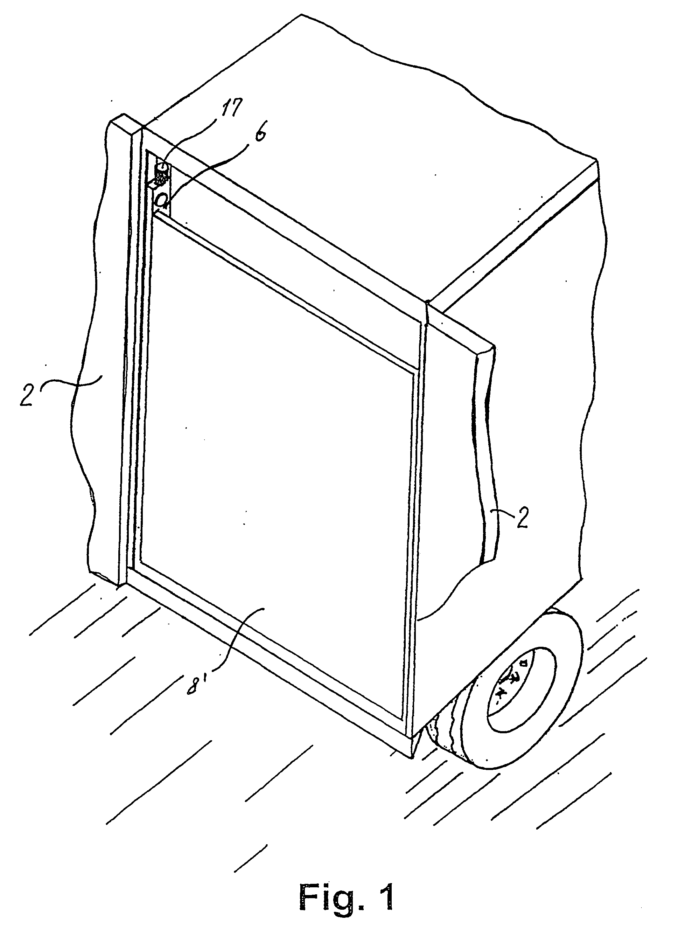

Referring to Figure 1, there is shown the lift device in a state ready for transportation in the vehicle. The telescopic guide means 6 and the platform support means 8 and the platform itself 8' are in this state substantially aligned with the support means 5 in the vertical position, and it is hence possible in this state of the lift device 10 to close the back doors 2 of the vehicle. It is implicitly assumed throughout the description that the lift device is symmetrically constructed, i.e. vertical support means 5, guide means 6 and platform support means etc. are located on either side of the doorway, and are functioning and activated in the same manner.

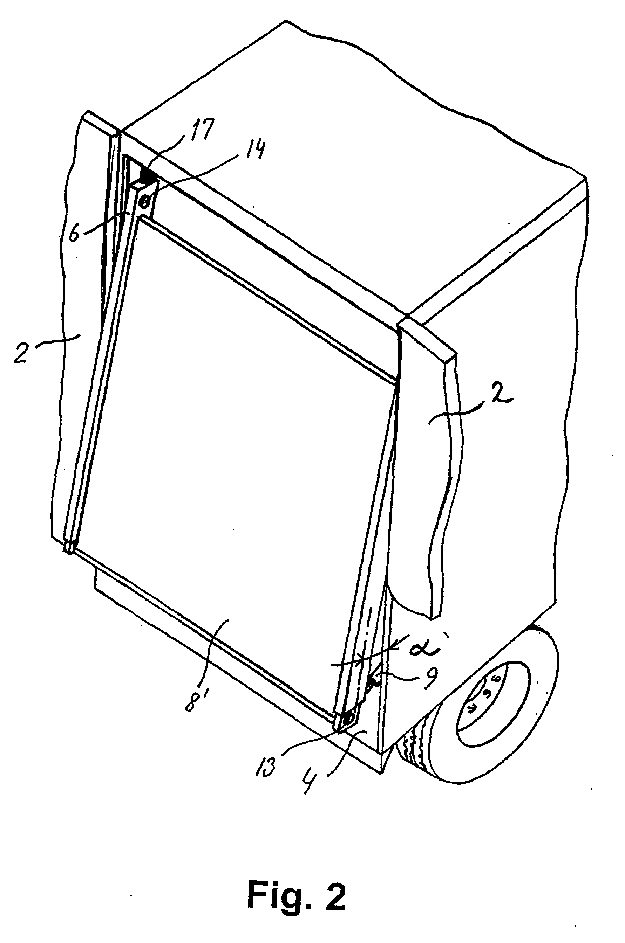

Referring to Figure 2, there is shown the operational stage during the use of the lift device according to the invention, in which the guide means 6 have been swung out of the rear end of the vehicle at an angle α relative to the substantially vertical support means 5 sufficiently large to allow the guide means 6 to clear the rear end of the vehicle, as the inner guide means 7 are lowered as described subsequently. The platform support means 8 and the platform 8' are still substantially aligned with the guide means.

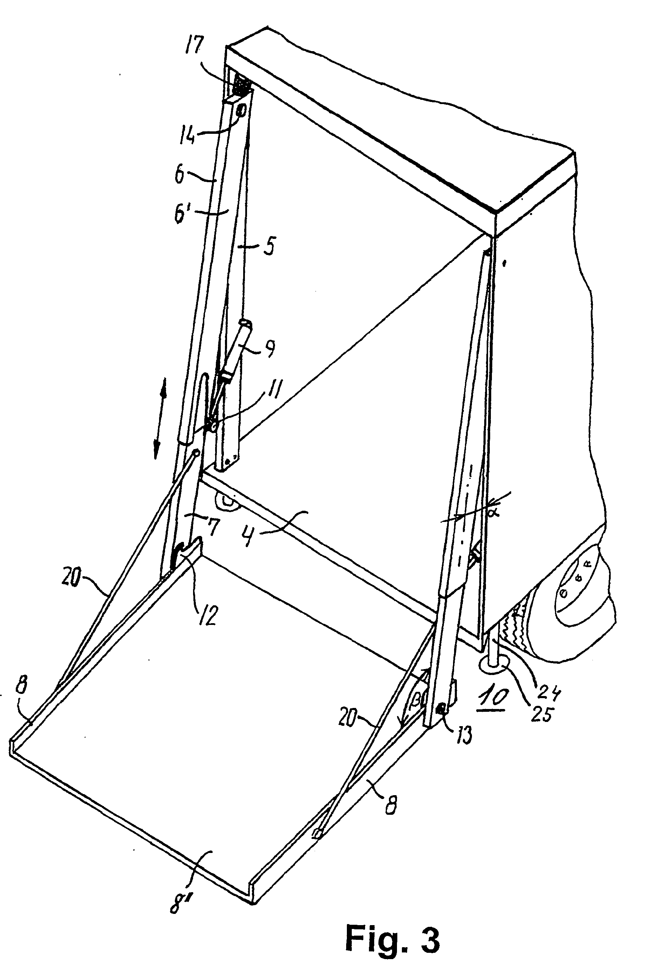

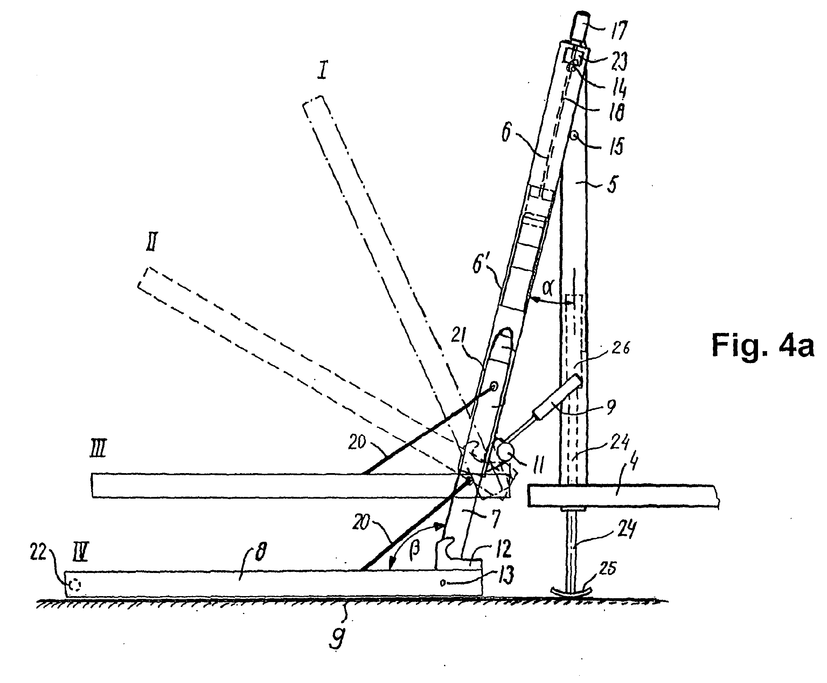

Referring to Figure 3, there is shown the lift device, generally designated by 10 in this and the following Figures, in a state where the platform has been lowered to ground level and where the lift device is ready for reception of for instance a pallet to be lifted from the ground to the level of the floor 4 of the vehicle. The lift device 10 essentially comprises the following main components: a pair of substantially vertical support beams 5 attached to either side wall of the vehicle at least at two points 15, 16 (see Figure 3) and possibly also to the floor 4 of the vehicle by means of suitable fittings, which are not shown in the Figure, and which are adapted to the particular vehicle; a pair of telescopic guide means 6, pivotally mounted at the vicinity of the highest longitudinal end of the support beam 5, so that said guide means during use of the lift device can be inclined at a certain angle a relative to the support beam 5, thereby enabling the guide means 6 to clear the back end of the vehicle. In order to minimise the torque exerted on the support means 5 - and hence on the side walls and bottom of the vehicle - it is advantageous that the inclination α be kept as small as possible; and platform support means 8, pivotally attached to the lower end of the telescopic guide means 6, enabling said platform support means 8 to assume a substantially horizontal position during use of the lift device. The further details of the lift device 10 will be described in connection with Figures 4a, 4b, 5 and 6. Finally, there is also shown a pair of support legs 24, 25 lowered from the rear end of the vehicle to support the lift device during use hereof, which support legs can be lowered and raised for instance by means of a hydraulic actuator placed inside the vertical support means 5, as described in connection with Figure 4a.

The main structural components of the lift device 10 together with its operational principle are described in the following with reference to Figures 4a, 4b, 5 and 6.

Referring to Figure 4a, there is shown a schematic representation of the lift device according to the invention in a series of different positions of the platform support means 8 during lowering or raising of the platform support means 8. The best way of describing the lift device 10 is by a description of the various stages of the operation hereof. It is thus assumed that the lift device 10 initially assumes the state shown in Figure 1, where the support means 5, the telescopic guide means 6 and the platform support means 8/platform 8' are aligned substantially in the vertical direction. Furthermore, in this state the support legs 24, 25 are drawn up into the vertical support means 5 driven by a hydraulic actuator 26 also located within the support means 5. The first operational step consists of lowering the support legs 24, 25 so that they are brought to rest firmly on the ground. The next operational step consists of an appropriate rotation of the guide means 6 relative to the support means 5, as indicated by the angle α in the Figure, in order for the inner guide means 7 to clear the rear end of the vehicle, thereby enabling the platform support means 8 to be displaced along the guide means 6. A typical inclination angle α will in practice be approximately 15 degrees, although this angle of cause depends on the dimensions of the rear end of the vehicle. It is preferable that α be kept as small as possible in order to minimise the torque exerted on the support means 5 and hence on the side (and possibly bottom) of the vehicle. The guide means 6 is rotated about the pivot axis 14 by means of a suitable actuator means 9, which could be a hydraulic actuator, although other kinds of actuator means could of course also be used.

The telescopic guide means 6 comprises an outer guide section 6', which in the embodiment shown in Figure 4a has a substantially rectangular cross section, although any other suitable cross sectional shape could of course also be used, and within which an inner guide section 7 is slidably displaceable in the longitudinal direction of the guide means 6. This longitudinal displacement is according to the present embodiment effected by means of an oil motor 17 provided with a longitudinally extending spindle 18 in engagement with an engagement means 19 in engagement with the threads of the spindle 18, so that the rotation of the spindle 18 causes a longitudinal displacement of the inner guide means 7. Also in this case it would be possible to utilise alternative means of effecting the longitudinal displacement of the inner guide means 7 within the outer guide means 6', such as for instance a hydraulic actuator. The only requirement is that it is possible to lock the inner guide means 7 longitudinally at a given position relative to the outer guide means 6', if desired.

At the lower end of the inner guide means 7, the platform support means 8 is pivotally mounted about a pivot axis 13 which in practice may be a spherical bearing. The platform support means are thus able to assume an inclined position relative to the inner guide means 7, this inclination being indicated by the angle β in Figure 4a. A wire or chain 20 is connected between a point on the platform support means 8 and the inner guide means 7 in order to restrict the inclination angle β. In order to allow the necessary longitudinal displacement of the attachment point of the chain 20 to the inner guide means 7, the outer guide means 6' is at its lower part provided with a suitable cutout 21.

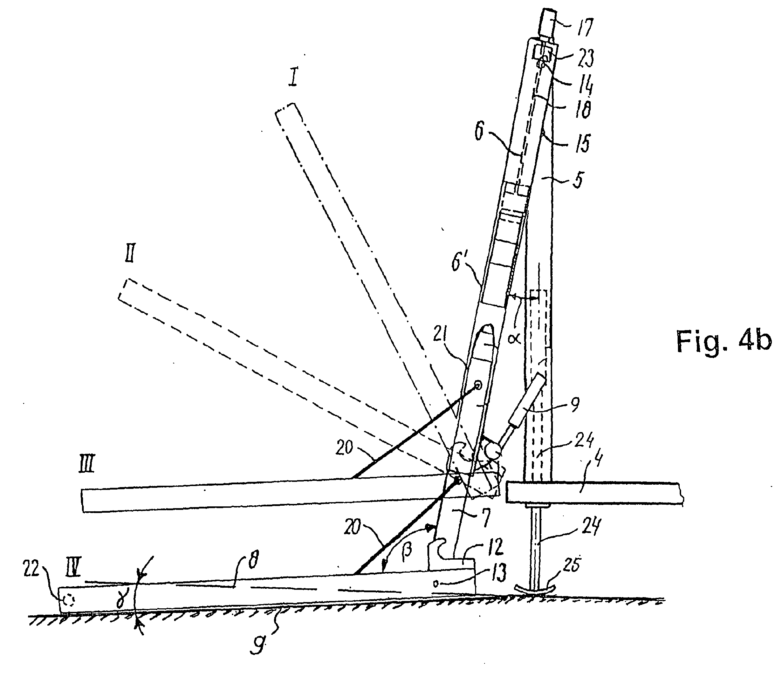

Referring now to Figure 4b there is shown an application of the lift device in a situation where the ground behind the rear portion of the vehicle is inclining an angle γ relative to the ground below the vehicle. The ability to change the inclination angle α of the guide means 6 relative to the vertical support means 5 by means of the actuator 9 is utilised in this situation to adapt the plane of the platform support means 8, and hence the platform itself, to the sloping ground. In Figure 4b the ground behind the rear portion of the vehicle is sloping downwards relative to the ground beneath the vehicle, but it is understood that the lift device according to the invention may also adapt the platform to an upwardly sloping ground by increasing the inclination angle α.

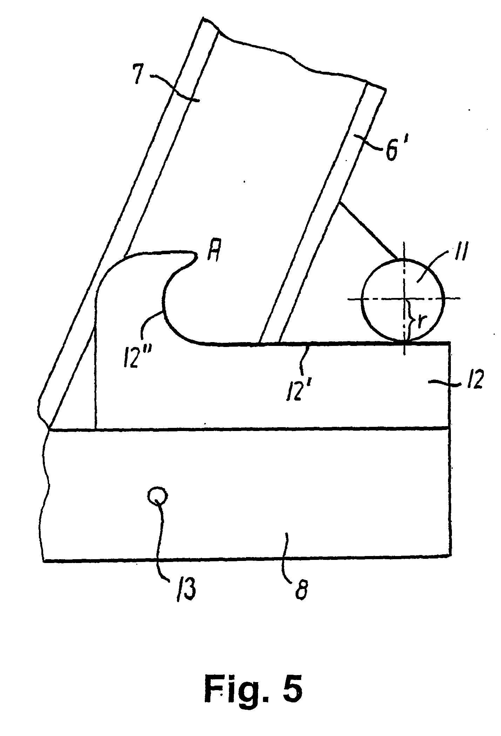

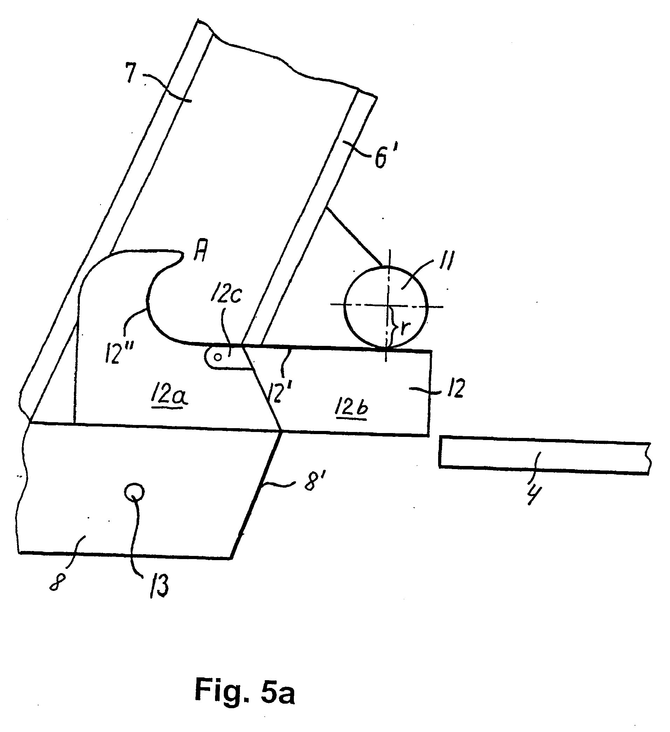

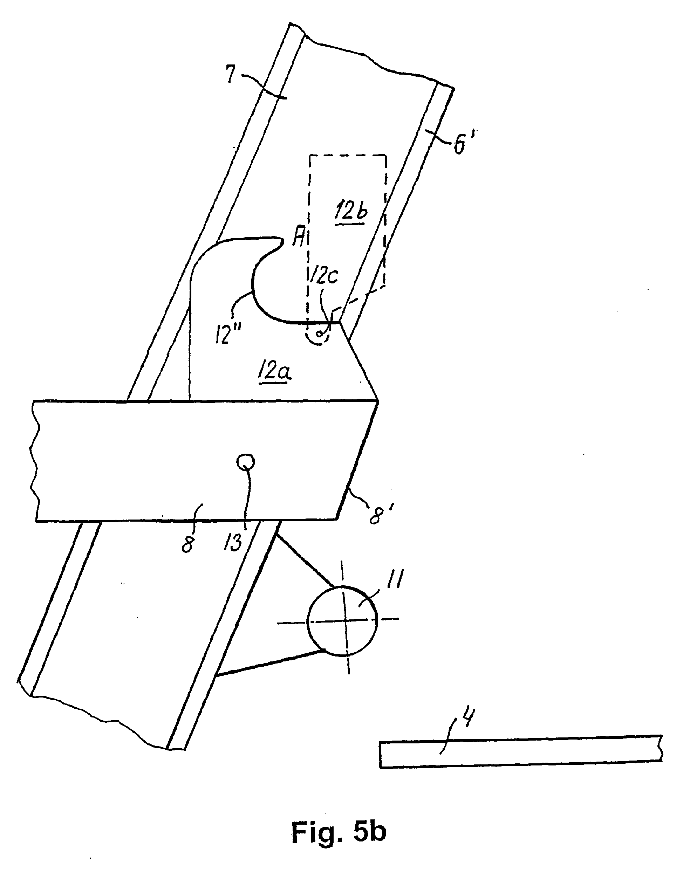

In order to effect the angular displacement of the platform support means 8 from its initial position in substantial alignment with the guide means 6 to its final substantially horizontal position indicated by IV in Figure 4a, the platform support means 8 are on their upper surface above the pivot axis 13 provided with an engagement means 12, which is shown in detail in Figure 5, and which comprises a first substantially linear portion 12' in parallel with the upper surface of the platform support means 8 and continuing in a circular second portion 12" terminated at a point A. The radius of curvature of this portion 12" of the engagement means 12 corresponds substantially to the radius r of a cylindrical tap 11 attached to the lower end of the outer guide means 6'.

When the platform support means 8 is initially lowered from a position where the engagement means 12 are located above the cylindrical tap 11 and where the platform support means are substantially aligned with the guide means 6, the cylindrical portion 12" is brought into contact with the cylindrical tap 11, and as the inner guide means 7 continues to move downwards, the engagement between the tap 11 and the engagement means 12 forces the platform support means 8 to rotate about the pivot axis 13 indicated by the angle β, until an inclination is reached, where the chain or wire 20 makes a further increase of the inclination impossible. At this stage (III in Figure 4a), the platform support means 8 is in a substantially horizontal position, and it remains in this position as the inner guide means 7 is displaced further downwards towards its final position, where it is in contact with the ground, as indicated by IV in Figure 4a.

In this final position IV of the platform support means 8, the cargo to be lifted can be placed on the platform 8' and preferably be positioned as close to the rear end of the vehicle as possible, in order to minimise the torque exerted on the vehicle. The platform support means 8 with the platform 8' is now displaced in the upward direction by means of the actuator 17, the spindle 18 and the engagement means 19, until a vertical level of the platform is reached, where it is possible to insert the cargo into the vehicle.

As described in the introduction, a problem may arise in cases where the platform 8' is not properly aligned with the floor 4 of the vehicle. In order to solve this problem, the following platform alignment system is incorporated, but it is understood that other embodiments of this system could be devised by a person skilled in the art without deviating from the scope of the invention as defined by the accompanying claims.

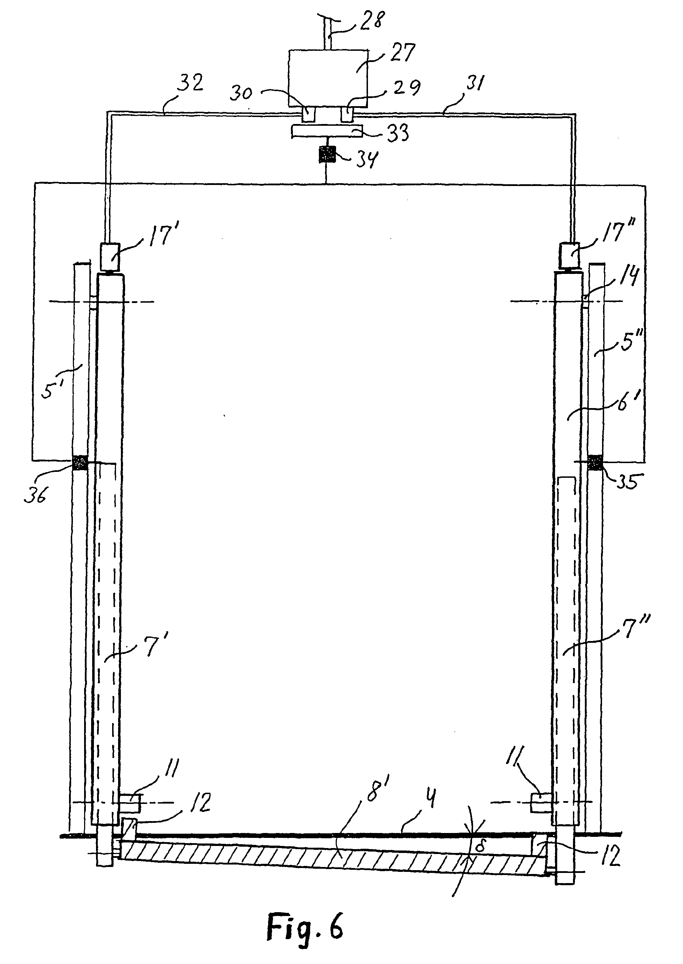

The platform alignment system is schematically described in Figure 6 and comprises two microswitches 35, 36 positioned in such a manner that they can be activated by the inner guide means 7', 7". Furthermore, the alignment system comprises a flow dividing means 27 directing 50% of the flow of oil applied to the flow dividing means 27 via the inlet 28 to one of the two outlets 29, and 50% to the other outlet 30 of the flow dividing means 27. These outlets 29, 30 are connected to the two oil motors 17', 17", respectively, via the lines 31 and 32. The system is furthermore provided with a shunt-connection 33, which can be connected between the two outlets 29 and 30 of the flow dividing means 27, said shunt-connection 33 being activated by means of a suitable actuator, for instance a magnetic actuator 34, driven by signals from the two microswitches 35, 36.

The system functions in the following manner: It is assumed that initially the platform 8' is positioned at its lowest position, in which position due to an inclination of the ground it has been brought into an inclined state relative to the bottom 4 of the vehicle, as indicated by the angle δ in the Figure. As the platform is being raised from its position on the ground by the two oil motors 17' and 17" displacing the inner guide means 7 longitudinally upwards, the left microswitch 36 becomes activated as the inner guide means 7 passes the microswitch 36. The vertical position of the microswitches 35 and 36 are chosen so that activation takes place immediately before the linear portion 12' of the attachment means 12 is brought into contact wit the corresponding cylindrical tap 11. With the inclination as indicated in Figure 6, the left microswitch 36 becomes activated prior to the right microswitch 35, and the microswitch 36 provides a signal to the magnetic actuator 34, whereby a fluid connection between the two outlets 29 and 30 of the flow divider 27 is established by means of the shunt-connection 33. The effect of this is that somewhat more than 50% of the flow of oil will be directed towards the right oil motor 17", and hence that this motor continues to raise the inner guide means 7 and hence the platform in the right side hereof until the platform 8' is aligned with the floor 4 of the vehicle. A further supply of oil to the two motors 17' and 17" will cause the platform 8' to be rotated by means of the attachment mechanism 11, 12 as described previously. The shunt-connection 33 still remains activated as long as the inner guide means 7', 7" are located above the vertical activation level of the microswitches 35, 36. When the platform hereafter is again lowered, the shunt-connection 33 will be disconnected when the upper end of the inner guide means 7', 7" assumes a lower vertical position than the activation level of the microswitches 35, 36. During this lowering, the platform 8' remains parallel with the floor 4 of the vehicle until possible irregularities of the ground make it assume an inclined position again.

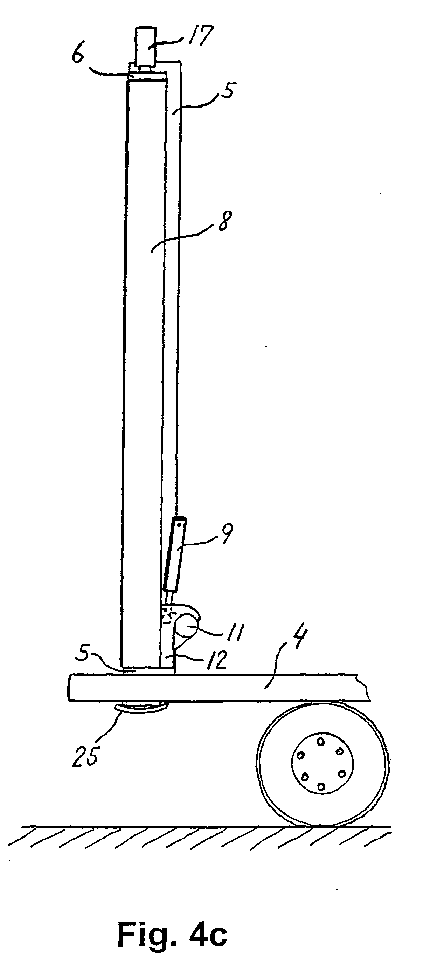

After use of the lift device 10, the following steps are performed for instance starting at position IV in Figure 4 (the platform alignment as described previously is of course also repeated again, if necessary):

The platform support means 8 is raised by an upward displacement of the inner guide means 7 within the outer guide means 6'. The platform support means 8 remains in this substantially horizontal position until a vertical level is reached, where the first linear portion 12' of the engagement means 12 is brought into contact with the cylindrical tap 11. This situation is indicated by III in Figures 4a and 4b. When the inner guide means 7 continues its upward displacement within the outer guide means 6', the linear portion 12' of the engagement means 12 is forced to be displaced relative to the cylindrical tap 11, and the tap 11 gradually moves in the direction towards the circular portion 12" of the engagement means 12. When this position is reached, the platform support means 8 rotates around the centre axis 13, as the inner guide means continues to move upwards, whereby the platform support means 8 is gradually swung to a position, where it is in substantial alignment with the guide means 6. A further upward displacement of the inner guide means 7 within the outer guide means 6' results in an engagement means 22 located at that end of the platform support means 8, which is furthest away from the pivot axis 13, being displaced into a retaining mechanism 23 located on the outer guide means 6', thereby retaining the platform support means 8 and the platform 8' in their final position relative to the guide means 6, i.e. in substantial alignment herewith.

As the next step of the procedure, the guide means 6 are rotated about the pivot axis 14 to a final position, where they are in substantial alignment with the support means 5 as shown in Figure 1, and in which position it is possible to close the back doors of the vehicle without interference with the lift device.

Finally, the support legs 24 are raised to a position, where they are housed in the hollow interior of the vertical support means 5 and where the support plate 25 is lying substantially flush with the bottom surface of the vehicle.

Referring now to Figures 5a and 5b, there is shown an alternative embodiment of the engagement means 12 for engagement with the cylindrical tap 11. As described above when the platform support means 8 during upward motion along the guide means 6 reaches the position indicated by III in Figures 4a and 4b, the engagement between the engagement means 12 and the cylindrical tap 11 makes the platform support means 8 rotate about its pivot axis 13 towards a position in alignment with the guide means 6. It may however be desired to utilise the lift device in situations where a cargo has to be moved from an initial position above the floor level of the vehicle to the floor level of the vehicle, or vice versa, and in such situations it is necessary to cancel the function of the engagement means 12. In order to accomplish this, the engagement means 12 is according to this alternative embodiment subdivided into two sections 12a, 12b connected to each other by means of a hinge 12c. It is thus possible to prevent the engagement between the engagement means 12 and the cylindrical tap 11 - as shown in Figures 5 and 5a - by rotating the rear section 12b to an upward position relative to the front section 12a as shown in Figure 5b. In this manner the rear portion of the engagement means and the rear portion 8' of the platform support means, which portion has been given an inclined shape as shown in Figures 5a and 5b, during motion of the platform support means 8 along the guide means 6 clear the cylindrical tap 11, whereby the platform support means is prevented from being rotated relative to the guide means 6 as described above.

Although one embodiment of the present invention has been shown and described in the preceding parts of the detailed description, it is understood that a person skilled in the art may conceive other embodiments of the invention without departing from the scope of the invention as defined by the following claims.

### REFERENCE NUMERALS

- 1: vehicle
- 2: back doors of vehicle
- 3: ground
- 4: floor of vehicle
- 5: vertical support means
- 6: telescopic guide means
- 6': outer part of telescopic guide means
- 7: inner part of telescopic guide means
- 8: platform support means
- 9: actuator
- 10: lift device
- 11: cylindrical tap
- 12: engagement means
- 13: pivot axis of platform support means
- 14: pivot axis of guide means
- 15: attachment of vertical support means
- 16: attachment of vertical support means
- 17: actuator of vertical support means
- 18: spindle
- 19: engagement means for spindle
- 20: chain or wire
- 21: cutout in outer part of telescopic guide means
- 22: engagement means
- 23: retaining mechanism
- 24: support leg
- 25: support plate
- 26: actuator for support leg
- 27: flow dividing means
- 28: inlet
- 29: outlet
- 30: outlet
- 31: pipeline
- 32: pipeline
- 33: shunt connection
- 34: magnetic actuator
- 35: microswitch
- 36: microswitch

## Claims

1. A lift device for moving a cargo between a first vertical level and a second vertical level, said device comprising left and right vertical support means (5), left and right guide means (6, 6', 7) pivotally connected to said support means (5) in the vicinity of the uppermost end of said support means (5), and platform support means (8) pivotally connected to said left and right guide means (6, 6', 7) for carrying said cargo, where each of said left and right guide means (6, 6', 7) are provided with separate drive means (17) for moving said cargo between said first vertical level and said second vertical level, and said drive means (17) can be driven independently of each other, and where said guide means (6, 6', 7) comprise outer guide means (6') pivotally connected to said support means (5) substantially at the upper end of said support means (5) and inner guide means (7) longitudinally displaceable relative to said outer guide means (6') and at their lower longitudinal end provided with said platform support means (8),
**characterised in**
**that** said platform support means (8) and said outer guide means (6') are provided with engagement means comprising first means (12) on said platform support means (8) for engagement with pivot means (11) on said outer guide means (6'), so that when said inner guide means (7) are displaced longitudinally within said outer guide means (6'), said first means (12) makes the platform support means (8) rotate above said pivot means (11) relative to said guide means (6).

2. A lift device according to claim 1, **characterised in that** said first means (12) comprises a first substantially linear portion (12') substantially parallel with the upper surface of said platform support means (8) and a second substantially circular portion (12") located at one end of said first portion (12'), and that said pivot means (11) is formed as a substantially cylindrical tap (11) attached to the lower end of the outer guide means (6'), where the radius (r) of said cylindrical tap (11) approximately corresponds to the radius of curvature of said second portion (12") of the first means.

3. A lift device according to any of the preceding claims, **characterised in that** said outer guide means (6') are hollow and accommodate said inner guide means (7) slidably displaceable within said outer guide means (6'), and which outer guide means (6') are furthermore provided with drive means (17, 18, 19) to displace said inner guide means (7) within said outer guide means (6').

4. A lift device according to claim 3, **characterised in that** said drive means comprise motors (17) coupled to spindles (18), which spindles (18) are in engagement with engagement means (19) provided on said inner guide means (7) of the guide means (6).

5. A lift device according to claim 1, **characterised in that** said pivotal movement is effected by means of actuators (9).

6. A lift device according to any of the preceding claims, **characterised in that** said pivotal movement of the guide means (6) and/or said linear displacement of the inner guide means (7) within the outer guide means (6') is effected manually.

7. A lift device according to any of the preceding claims, **characterised in that** said support means (5) are attached to the inner surface of the walls of the vehicle by suitable attachment means, which can be specific for different vehicles.

8. A lift device according to claim 7, **characterised in that** said support means (5) are attached to the bottom of the vehicle.

9. A lift device according to any of the preceding claims, **characterised in that** the maximum inclination angle (β) of the platform support means (8) relative to the guide means (6) is restricted by means of a chain, wire or the like (20) connected between the platform support means (8) and the inner guide means (7).

10. A lift device according to any of the preceding claims, **characterised in that** said platform support means (8) carries a platform (8') for loading a cargo.

11. A lift device according to any of the preceding claims, **characterised in that** said platform support means (8) at the end hereof furthest away from its pivot axis (13) is provided with retainer means (22) which are brought into engagement with corresponding means (23) provided at the upper end of the outer guide means (6'), so that when the platform support means (8) is displaced to its uppermost position relative to the guide means (6), the platform support means (8) becomes locked in this position.

12. A lift device according to any of the preceding claims, **characterised in that** the device comprises at least one support leg (22), for supporting the lift device during use hereof.

13. A lift device according to claim 12, **characterised in that** said support leg(s) (22) in one state hereof are housed within the vertical support means (5) with one end of said leg(s) (22) passing through a suitable opening in the bottom of the vehicle.

14. A lift device according to claim 12 or 13, **characterised in that** said leg(s) (22) can be lowered/raised by means of actuators (26).

15. A lift device according to claim 14, **characterised in that** said actuators are located within said vertical support means (5).

16. A lift device according to any of the preceding claims, **characterised in that** a platform alignment system is provided for driving each of the actuator means (17', 17") for the inner guide means (7', 7") independently of each other, when the angle (6) between the plane of the platform (8') and the bottom (4) of the vehicle is substantially different from zero, such that one of said inner guide means (7', 7") is longitudinally displaced relative to the other inner guide means (7', 7"), thereby reducing said angle (δ) to substantially zero.

17. A lift device according to claim 16, **characterised in that** said actuator means (17', 17") consists of two oil motors supplied with oil from a flow divider means (27) provided with an inlet (28) and two outlets (29, 30), which outlets (29, 30) are connected to the respective oil motors (17', 17") via lines (31, 32) **characterised in that** a shunt connection (33) can be established between said two outlets (29, 30) when it is detected that said angle (δ) differs substantially from zero.

18. A lift device according to claim 17, **characterised in that** said detection of an angle (δ) substantially different from zero takes place with the aid of two microswitches (35, 36) placed at the same vertical level relative to the vehicle, which microswitches can be activated by said inner guide means (7', 7"), and where said shunt connection (33) is activated by signals from said microswitches (35, 36) with the aid of a magnetic actuator (34).

19. A lift device according to claim 1 or 2, **characterised in that** said engagement means (12) is subdivided into a first section (12a) and a second section (12b), where said second section (12b) can be rotated relative to said first section (12a).

20. A lift device according to any of the preceding claims, further comprising: Platform rotating means for rotating a platform support means (8) from an initial position substantially in alignment with said outer guide means (6') to a final substantially horizontal position and vice versa, **characterised in that** said platform support means (8) and said outer guide means (6') are provided with engagement means comprising first means (12) on said platform support means (8) for engagement with pivot means (11) on said outer guide means (6'), so that when said inner guide means (7) are displaced longitudinally within said outer guide means (6'), said first means (12) makes the platform support means (8) rotate above said pivot means (11) relative to said guide means (6).

21. A lift device according to claim 20, further comprising Platform rotating means, **characterised in that** said first means (12) comprises a first substantially linear portion (12') substantially parallel with the upper surface of said platform support means (8) and a second substantially circular portion (12") located at one end of said first portion (12'), and that said pivot means (11) is formed as a substantially cylindrical tap (11) attached to the lower end of the outer guide means (6'), where the radius (r) of said cylindrical tap (11) approximately corresponds to the radius of curvature of said second portion (12") of the first means.

## Patentansprüche

1. Hubvorrichtung zum Bewegen einer Ladung zwischen einem ersten senkrechten Niveau und einem zweiten senkrechten Niveau, wobei die Vorrichtung aufweist: eine linke und eine rechte senkrechte Stützeinrichtung (5), eine linke und eine rechte Führungseinrichtung (6, 6', 7), die mit den Stützeinrichtungen (5) in der Umgebung des obersten Endes der Stützeinrichtungen (5) schwenkbar verbunden sind, und Plattformstützeinrichtungen (8), die mit der linken und rechten Führungseinrichtung (6, 6', 7) zum Tragen der Ladung schwenkbar verbunden sind, wobei die linke und rechte Führungseinrichtung (6, 6', 7) jeweils mit einer gesonderten Antriebseinrichtung (17) zum Bewegen der Ladung zwischen dem ersten senkrechten Niveau und dem zweiten senkrechten Niveau versehen sind und die Antriebseinrichtungen (17) unabhängig voneinander angetrieben werden können und wobei die Führungseinrichtungen (6, 6', 7) aufweisen: Außenführungseinrichtungen (6'), die mit den Stützeinrichtungen (5) im wesentlichen am oberen Ende der Stützeinrichtungen (5) schwenkbar verbunden sind, und Innenführungseinrichtungen (7), die relativ zu den Außenführungseinrichtungen (6') längs verschiebbar und an ihrem unteren Längsende mit den Plattformstützeinrichtungen (8) versehen sind,
**dadurch gekennzeichnet,**
**daß** die Plattformstützeinrichtungen (8) und die Außenführungseinrichtungen (6') mit Eingriffseinrichtungen versehen sind, die erste Einrichtungen (12) an den Plattformstützeinrichtungen (8) zum Eingriff mit Schwenkeinrichtungen (11) an den Außenführungseinrichtungen (6') aufweisen, so daß bei Längsverschiebung der Innenführungseinrichtungen (7) in den Außenführungseinrichtungen (6') die erste Einrichtung (12) die Plattformstützeinrichtungen (8) über die Schwenkeinrichtungen (11) relativ zu den Führungseinrichtungen (6) drehen läßt.

2. Hubvorrichtung nach Anspruch 1, **dadurch gekennzeichnet, daß** die erste Einrichtung (12) aufweist: einen ersten im wesentlichen linearen Abschnitt (12') im wesentlichen parallel zur Oberseite der Plattformstützeinrichtung (8) und einen zweiten im wesentlichen kreisförmigen Abschnitt (12"), der an einem Ende des ersten Abschnitts (12') liegt, und daß die Schwenkeinrichtung (11) als im wesentlichen zylindrischer Zapfen (11) ausgebildet ist, der am unteren Ende der Außenführungseinrichtung (6') angebracht ist, wobei der Radius (r) des zylindrischen Zapfens (11) etwa dem Krümmungsradius des zweiten Abschnitts (12") der ersten Einrichtung entspricht.

3. Hubvorrichtung nach einem der vorstehenden Ansprüche, **dadurch gekennzeichnet, daß** die Außenführungseinrichtungen (6') hohl sind und die Innenführungseinrichtungen (7) gleitfähig verschiebbar in den Außenführungseinrichtungen (6') unterbringen und die Außenführungseinrichtungen (6') ferner mit Antriebseinrichtungen (17, 18, 19) versehen sind, um die Innenführungseinrichtungen (7) in den Außenführungseinrichtungen (6') zu verschieben.

4. Hubvorrichtung nach Anspruch 3, **dadurch gekennzeichnet, daß** die Antriebseinrichtungen Motoren (17) aufweisen, die mit Spindeln (18) gekoppelt sind, wobei die Spindeln (18) mit Eingriffseinrichtungen (19) in Eingriff stehen, die an den Innenführungseinrichtungen (7) der Führungseinrichtungen (6) vorgesehen sind.

5. Hubvorrichtung nach Anspruch 1, **dadurch gekennzeichnet, daß** die Schwenkbewegung mittels Aktoren (9) bewirkt wird.

6. Hubvorrichtung nach einem der vorstehenden Ansprüche, **dadurch gekennzeichnet, daß** die Schwenkbewegung der Führungseinrichtungen (6) und/oder die lineare Verschiebung der Innenführungseinrichtungen (7) in den Außenführungseinrichtungen (6') manuell bewirkt wird.

7. Hubvorrichtung nach einem der vorstehenden Ansprüche, **dadurch gekennzeichnet, daß** die Stützeinrichtungen (5) an der Innenfläche der Wände des Fahrzeugs durch geeignete Befestigungseinrichtungen angebracht sind, die für unterschiedliche Fahrzeuge spezifisch sein können.

8. Hubvorrichtung nach Anspruch 7, **dadurch gekennzeichnet, daß** die Stützeinrichtungen (5) am Boden des Fahrzeugs angebracht sind.

9. Hubvorrichtung nach einem der vorstehenden Ansprüche, **dadurch gekennzeichnet, daß** der maximale Neigungswinkel (β) der Plattformstützeinrichtungen (8) relativ zu den Führungseinrichtungen (6) mittels einer Kette, eines Drahts oder dergleichen (20) eingeschränkt ist, die bzw. der zwischen den Plattformstützeinrichtungen (8) und den Innenführungseinrichtungen (7) verbunden ist.

10. Hubvorrichtung nach einem der vorstehenden Ansprüche, **dadurch gekennzeichnet, daß** die Plattformstützeinrichtung (8) eine Plattform (8') zum Laden einer Ladung trägt.

11. Hubvorrichtung nach einem der vorstehenden Ansprüche, **dadurch gekennzeichnet, daß** die Plattformstützeinrichtung (8) an dem von ihrer Schwenkachse (13) am weitesten entfernten Ende mit Halteeinrichtungen (22) versehen ist, die mit entsprechenden Einrichtungen (23) in Eingriff gebracht werden, die am oberen Ende der Außenführungseinrichtungen (6') vorgesehen sind, so daß bei Verschiebung der Plattformstützeinrichtung (8) in ihre oberste Position relativ zur Führungseinrichtung (6) die Plattformstützeinrichtung (8) in dieser Position verriegelt wird.

12. Hubvorrichtung nach einem der vorstehenden Ansprüche, **dadurch gekennzeichnet, daß** die Vorrichtung mindestens einen Stützfuß (22) zum Abstützen der Hubvorrichtung während ihres Gebrauchs aufweist.

13. Hubvorrichtung nach Anspruch 12, **dadurch gekennzeichnet, daß** der Stützfuß (die Stützfüße) (22) in einem Zustand in den senkrechten Stützeinrichtungen (5) untergebracht ist (sind), wobei ein Ende des Fußes (der Füße) (22) eine geeignete Öffnung im Boden des Fahrzeugs durchläuft.

14. Hubvorrichtung nach Anspruch 12 oder 13, **dadurch gekennzeichnet, daß** der Fuß (die Füße) (22) mittels Aktoren (26) abgesenkt/angehoben werden kann (können).

15. Hubvorrichtung nach Anspruch 14, **dadurch gekennzeichnet, daß** die Aktoren in den senkrechten Stützeinrichtungen (5) liegen.

16. Hubvorrichtung nach einem der vorstehenden Ansprüche, **dadurch gekennzeichnet, daß** ein Plattformausrichtungsystem zum Antreiben jeder der Aktoreinrichtungen (17', 17") für die Innenführungseinrichtungen (7', 7") unabhängig voneinander vorgesehen ist, wenn sich der Winkel (δ) zwischen der Ebene der Plattform (8') und dem Boden (4) des Fahrzeugs von null wesentlich unterscheidet, so daß eine der Innenführungseinrichtungen (7', 7") relativ zur anderen Innenführungseinrichtung (7', 7") längs verschoben wird, wodurch der Winkel (δ) im wesentlichen auf null verringert wird.

17. Hubvorrichtung nach Anspruch 16, **dadurch gekennzeichnet, daß** die Aktoreinrichtung (17', 17") aus zwei Ölmotoren besteht, denen Öl von einer Durchflußteilereinrichtung (27) zugeführt wird, die mit einem Einlaß (28) und zwei Auslässen (29, 30) versehen ist, wobei die Auslässe (29, 30) mit den jeweiligen Ölmotoren (17', 17") über Leitungen (31, 32) verbunden sind, **dadurch gekennzeichnet, daß** eine Nebenschlußverbindung (33) zwischen den beiden Auslässen (29, 30) hergestellt werden kann, wenn detektiert wird, daß sich der Winkel (δ) von null wesentlich unterscheidet.

18. Hubvorrichtung nach Anspruch 17, **dadurch gekennzeichnet, daß** die Detektion eines sich von null wesentlich unterscheidenden Winkels (δ) mit Hilfe zweier Mikroschalter (35, 36) stattfindet, die auf dem gleichen senkrechten Niveau relativ zum Fahrzeug plaziert sind, wobei die Mikroschalter durch die Innenführungseinrichtungen (7', 7") aktiviert werden können und wobei die Nebenschlußverbindung (33) durch Signale von den Mikroschaltern (35, 36) mit Hilfe eines magnetischen Aktors (34) aktiviert wird.

19. Hubvorrichtung nach Anspruch 1 oder 2, **dadurch gekennzeichnet, daß** die Eingriffseinrichtung (12) in ein erstes Teilstück (12a) und ein zweites Teilstück (12b) unterteilt ist, wobei das zweite Teilstück (12b) relativ zum ersten Teilstück (12a) gedreht werden kann.

20. Hubvorrichtung nach einem der vorstehenden Ansprüche, ferner mit einer Plattformdreheinrichtung zum Drehen einer Plattformstützeinrichtung (8) aus einer Anfangsposition im wesentlichen in Ausrichtung zur Außenführungseinrichtung (6') in eine im wesentlichen waagerechte Endposition und umgekehrt, **dadurch gekennzeichnet, daß** die Plattformstützeinrichtungen (8) und die Außenführungseinrichtungen (6') mit Eingriffseinrichtungen versehen sind, die erste Einrichtungen (12) an den Plattformstützeinrichtungen (8) zum Eingriff mit Schwenkeinrichtungen (11) an den Außenführungseinrichtungen (6') aufweisen, so daß bei Längsverschiebung der Innenführungseinrichtungen (7) in den Außenführungseinrichtungen (6') die erste Einrichtung (12) die Plattformstützeinrichtungen (8) über die Schwenkeinrichtungen (11) relativ zu den Führungseinrichtungen (6) drehen läßt.

21. Hubvorrichtung nach Anspruch 20, ferner mit einer Plattformdreheinrichtung, **dadurch gekennzeichnet, daß** die erste Einrichtung (12) aufweist: einen ersten im wesentlichen linearen Abschnitt (12') im wesentlichen parallel zur Oberseite der Plattformstützeinrichtung (8) und einen zweiten im wesentlichen kreisförmigen Abschnitt (12"), der an einem Ende des ersten Abschnitts (12') liegt, und daß die Schwenkeinrichtung (11) als im wesentlichen zylindrischer Zapfen (11) ausgebildet ist, der am unteren Ende der Außenführungseinrichtung (6') angebracht ist, wobei der Radius (r) des zylindrischen Zapfens (11) etwa dem Krümmungsradius des zweiten Abschnitts (12") der ersten Einrichtung entspricht.

## Revendications

1. Dispositif de levage pour déplacer un chargement entre un premier niveau vertical et un second niveau vertical, ledit dispositif comprenant des moyens de support verticaux gauche et droit (5), des moyens de guidage gauche et droit (6, 6', 7) raccordés de manière pivotante auxdits moyens de support (5) à proximité de l'extrémité la plus haute desdits moyens de support (5), et des moyens de support de plate-forme (8) raccordés de manière pivotante auxdits moyens de guidage gauche et droit (6, 6', 7) pour supporter ledit chargement, où chacun desdits moyens de guidage gauche et droit (6, 6', 7) sont dotés de moyens d'entraînement séparés (17) pour déplacer ledit chargement entre ledit premier niveau vertical et ledit second niveau vertical, et lesdits moyens d'entraînement (17) peuvent être entraînés indépendamment l'un de l'autre, et où lesdits moyens de guidage (6, 6', 7) comprennent des moyens de guidage externes (6') raccordés de manière pivotante auxdits moyens de support (5) sensiblement au niveau de l'extrémité supérieure desdits moyens de support (5) et des moyens de guidage internes (7) pouvant être déplacés de manière longitudinale par rapport auxdits moyens de guidage externes (6') et au niveau de leur extrémité longitudinale inférieure, dotés desdits moyens de support de plate-forme (8),
**caractérisé en ce que** lesdits moyens de support de plate-forme (8) et lesdits moyens de guidage externes (6') sont dotés de moyens de mise en prise comprenant des premiers moyens (12) sur lesdits moyens de support de plate-forme (8) pour la mise en prise avec des moyens de pivot (11) sur lesdits moyens de guidage externes (6'), de sorte que lorsque lesdits moyens de guidage internes (7) sont déplacés de manière longitudinale dans lesdits moyens de guidage externes (6'), lesdits premiers moyens (12) font tourner les moyens de support de plate-forme (8) au-dessus desdits moyens de pivot (11) par rapport auxdits moyens de guidage (6).

2. Dispositif de levage selon la revendication 1, **caractérisé en ce que** lesdits premiers moyens (12) comprennent une première partie sensiblement linéaire (12') sensiblement parallèle à la surface supérieure desdits moyens de support de plate-forme (8) et une seconde partie sensiblement circulaire (12") située au niveau d'une extrémité de ladite première partie (12') et **en ce que** lesdits moyens de pivot (11) sont formés comme un organe sensiblement cylindrique (11) fixé à l'extrémité inférieure des moyens de guidage externes (6'), où le rayon (r) dudit organe cylindrique (11) correspond approximativement au rayon de courbure de ladite seconde partie (12") desdits premiers moyens.

3. Dispositif de levage selon l'une quelconque des revendications précédentes, **caractérisé en ce que** lesdits moyens de guidage externes (6') sont creux et logent lesdits moyens de guidage internes (7) pouvant être déplacés de manière coulissante à l'intérieur desdits moyens de guidage externes (6'), et lesquels moyens de guidage externes (6') sont en outre dotés de moyens d'entraînement (17, 18, 19) pour déplacer lesdits moyens de guidage internes (7) à l'intérieur desdits moyens de guidage externes (6').

4. Dispositif de levage selon la revendication 3, **caractérisé en ce que** lesdits moyens d'entraînement comprennent des moteurs (17) couplés à des fusées (18), lesquelles fusées (18) sont en mise en prise avec des moyens de mise en prise (19) prévus sur lesdits moyens de guidage internes (7) desdits moyens de guidage (6).

5. Dispositif de levage selon la revendication 1, **caractérisé en ce que** ledit mouvement pivotant est effectué au moyen d'actionneurs (9).

6. Dispositif de levage selon l'une quelconque des revendications précédentes, **caractérisé en ce que** ledit mouvement pivotant des moyens de guidage (6) et/ou ledit déplacement linéaire des moyens de guidage internes (7) à l'intérieur des moyens de guidage externes (6') est effectué manuellement.

7. Dispositif de levage selon l'une quelconque des revendications précédentes, **caractérisé en ce que** lesdits moyens de support (5) sont fixés à la surface interne des parois du véhicule par des moyens de fixation appropriés, qui peuvent être spécifiques pour différents véhicules.

8. Dispositif de levage selon la revendication 7, **caractérisé en ce que** lesdits moyens de support (5) sont fixés au fond du véhicule.

9. Dispositif de levage selon l'une quelconque des revendications précédentes, **caractérisé en ce que** l'angle d'inclinaison maximum (β) des moyens de support de plate-forme (8) par rapport aux moyens de guidage (6) est limité au moyen d'une chaîne, d'un câble ou similaire (20) raccordé entre les moyens de support de plate-forme (8) et les moyens de guidage internes (7).

10. Dispositif de levage selon l'une quelconque des revendications précédentes, **caractérisé en ce que** lesdits moyens de support de plate-forme (8) supportent une plate-forme (8') pour charger un chargement.

11. Dispositif de levage selon l'une quelconque des revendications précédentes, **caractérisé en ce que** lesdits moyens de support de plate-forme (8) au niveau de leur extrémité la plus éloignée de leur axe de pivot (13) sont dotés de moyens de retenue (22) qui sont amenés en mise en prise avec des moyens correspondants (23) prévus au niveau de l'extrémité supérieure des moyens de guidage externes (6'), de sorte que lorsque les moyens de support de plate-fonne (8) sont déplacés dans leur position la plus haute par rapport aux moyens de guidage (6), les moyens de support de plate-fomie (8) se bloquent dans cette position.

12. Dispositif de levage selon l'une quelconque des revendications précédentes, **caractérisé en ce que** le dispositif comprend au moins une patte de support (22) pour supporter le dispositif de levage pendant son utilisation.

13. Dispositif de levage selon la revendication 12, **caractérisé en ce que** ladite (lesdites) patte(s) de support (22) dans leur état, sont logées à l'intérieur des moyens de support verticaux (5) avec une extrémité de ladite (desdites) patte(s) (22) passant par une ouverture appropriée dans le fond du véhicule.

14. Dispositif de levage selon la revendication 12 ou 13, **caractérisé en ce que** ladite (lesdites) patte(s) (22) peut (peuvent) être abaissée(s)/levée(s) au moyen d'actionneurs (26).

15. Dispositif de levage selon la revendication 14, **caractérisé en ce que** lesdits actionneurs sont positionnés à l'intérieur desdits moyens de support verticaux (5).

16. Dispositif de levage selon l'une quelconque des revendications précédentes, **caractérisé en ce qu'**un système d'alignement de plate-forme est prévu pour entraîner chacun des moyens d'actionneur (17', 17") pour les moyens de guidage internes (7', 7") indépendamment l'un de l'autre, lorsque l'angle (δ) entre le plan de la plate-forme (8') et le fond (4) du véhicule est sensiblement différent de zéro, de sorte que l'un desdits moyens de guidage internes (7', 7") est longitudinalement déplacé par rapport aux autres moyens de guidage internes (7', 7"), réduisant ainsi ledit angle (δ) à sensiblement zéro.

17. Dispositif de levage selon la revendication 16, **caractérisé en ce que** lesdits moyens d'actionneur (17', 17") se composent de deux moteurs à huile alimentés avec de l'huile provenant de moyens de répartiteur de débit (27) prévus avec une entrée (28) et deux sorties (29, 30), lesquelles sorties (29, 30) sont raccordées aux moteurs à huile (17', 17") respectifs via des conduites (31, 32), **caractérisé en ce qu'**un raccordement de dérivation (33) peut être établi entre lesdites deux sorties (29, 30) lorsque l'on détecte que ledit angle (δ) est sensiblement différent de zéro.

18. Dispositif de levage selon la revendication 17, **caractérisé en ce que** ladite détection d'un angle (δ) sensiblement différent de zéro a lieu à l'aide de deux microinterrupteurs (35, 36) placés sur le même niveau vertical par rapport au véhicule, lesquels micro interrupteurs peuvent être activés par lesdits moyens de guidage internes (7', 7") et où ledit raccordement de dérivation (33) est activé par des signaux provenant desdits micro interrupteurs (35, 36) à l'aide d'un actionneur magnétique (34).

19. Dispositif de levage selon la revendication 1 ou 2, **caractérisé en ce que** lesdits moyens de mise en prise (12) sont divisés en une première section (12a) et en une seconde section (12b), où ladite seconde section (12b) peut être entraînée en rotation par rapport à ladite première section (12a).

20. Dispositif de levage selon l'une quelconque des revendications précédentes, comprenant en outre :
des moyens de rotation de plate-forme pour faire tourner des moyens de support de plate-forme (8) à partir d'une position initiale sensiblement alignée avec lesdits moyens de guidage externes (6') jusqu'à une position finale sensiblement horizontale et vice versa, **caractérisé en ce que** lesdits moyens de support de plate-forme (8) et lesdits moyens de guidage externes (6') sont dotés de moyens de mise en prise comprenant des premiers moyens (12) sur lesdits moyens de support de plate-forme (8) pour la mise en prise avec des moyens de pivot (11) sur lesdits moyens de guidage externes (6'), de sorte que lorsque lesdits moyens de guidage internes (7) sont déplacés longitudinalement à l'intérieur desdits moyens de guidage externes (6'), lesdits premiers moyens (12) font tourner les moyens de support de plate-forme (8) au-dessus desdits moyens de pivot (11) par rapport auxdits moyens de guidage (6).

21. Dispositif de levage selon la revendication 20, comprenant en outre des moyens de rotation de plate-forme, **caractérisé en ce que** lesdits premiers moyens (12) comprennent une première partie sensiblement linéaire (12') sensiblement parallèle à la surface supérieure desdits moyens de support de plate-forme (8) et une seconde partie sensiblement circulaire (12") positionnée au niveau d'une extrémité de ladite première partie (12'), et **en ce que** lesdits moyens de pivot (11) sont formés comme un organe sensiblement cylindrique (11) fixé à l'extrémité inférieure des moyens de guidage externes (6'), où le rayon (r) dudit organe cylindrique (11) correspond approximativement au rayon de courbure de ladite seconde partie (12") des premiers moyens.
